# EUROPEAN PATENT SPECIFICATION

(11) **EP 4 280 331 B1**
(45) Date of publication and mention of the grant of the patent: **06.05.2026**
(21) Application number: 23172472.5
(22) Date of filing: 10.05.2023
(51) Int. Cl.: H01M 10/052, H01M 10/0567, H01M 10/0568, H01M 10/0569

(54) **CARBONATE-BASED ELECTROLYTE, METHOD FOR MAKING THE SAME, AND LITHIUM METAL BATTERY**
ELEKTROLYT AUF CARBONATBASIS, VERFAHREN ZUR HERSTELLUNG DAVON UND LITHIUMMETALLBATTERIE
ÉLECTROLYTE À BASE DE CARBONATE, SON PROCÉDÉ DE FABRICATION ET BATTERIE AU LITHIUM MÉTALLIQUE

(30) Priority: 20.05.2022 CN 202210556715
(43) Date of publication of application: 22.11.2023
(73) Proprietor: Hon Hai Precision Industry Co., Ltd., New Taipei City (TW); SolidEdge Solution Inc., Hsinchu 300 (TW)
(72) Inventor: CHEN, WEI-CHAO, 300 Hsinchu (TW); WANG, PIN-HAN, 300 Hsinchu (TW); LAI, HONG-ZHENG, 300 Hsinchu (TW); CHANG, TSENG-LUNG, 300 Hsinchu (TW)
(74) Representative: Zaboliene, Reda

(56) References cited:
- CN-A- 111 864 260
- CN-A- 113 131 000
- US-A1- 2018 351 200
- RAO XIANFA ET AL: "Strategies for Dendrite-Free lithium metal Anodes: A Mini-review", JOURNAL OF ELECTROANALYTICAL CHEMISTRY, ELSEVIER, AMSTERDAM, NL, vol. 897, 1 July 2021 (2021-07-01), XP086761035, ISSN: 1572-6657, [retrieved on 20210701], DOI: 10.1016/J.JELECHEM.2021.115499
- VARZI ALBERTO ET AL: "Current status and future perspectives of lithium metal batteries", JOURNAL OF POWER SOURCES, ELSEVIER, AMSTERDAM, NL, vol. 480, 9 September 2020 (2020-09-09), XP086351032, ISSN: 0378-7753, [retrieved on 20200909], DOI: 10.1016/J.JPOWSOUR.2020.228803

## Description

### CROSS-REFERENCE TO RELATED APPLICATIONS

This application claims all benefits from the Chinese Patent Application No. 202210556715.X, filed on May 20, 2022, in the China National Intellectual Property Administration.

### BACKGROUND

### 1. Technical Field

The present application relates to a carbonate-based electrolyte, a method for making the carbonate-based electrolyte, and a lithium metal battery using the carbonate-based electrolyte.

### 2. Discussion of Related Art

With the continuous progress of society, the demand for various electric vehicles and portable electronic products continues to increase, and the energy density of traditional lithium-ion batteries has reached to its theoretical energy limit, which is not enough to meet the growing demands of the consumers. Therefore, research on rechargeable batteries with higher energy density has become a research focal point. Lithium metal has the highest theoretical gram capacity (3860mAh/g) and relatively low electrochemical reduction potential (-3.04V), thus the lithium metal gained the most research attention as a candidate for negative electrode material. However, in practical applications, due to the charging/discharging behavior of lithium metal and carbonate-based liquid electrolyte, the lithium dendrite is easily generated, resulting unusable lithium rapidly accumulated, and the coulombic efficiency and the battery cycle life are reduced. Therefore, how to effectively inhibit the growth of lithium dendrite and dead lithium, prolong its cycle life in liquid electrolyte, and obtain the high-capacity lithium metal negative batterie is a very important topic in the research field.

To solve the above problems, the most effective way at present is to promote the formation of an inorganic solid electrolyte interface (SEI) layer by adding an additive to the electrolyte. There is a very weak force between the SEI layer and the lithium metal, which can accelerate the conduction of the lithium ion between interfaces and simultaneously inhibit the formation of the lithium dendrite. The lithium nitrate has been shown to be an effective and critical electrolyte additive with high solubility in ether electrolytes. However, conventional ether-based electrolyte cannot be used with high-voltage positive electrode material due to its narrow electrochemical window. The carbonate-based electrolyte has a wider electrochemical window than the ether-based electrolyte, and is often used in a combination of the high-voltage positive electrode material and the lithium metal negative electrode, however the solubility of the lithium nitrate in the carbonate electrolyte is very low. Addition of lithium nitrate in the carbonate electrolyte has great potential in realizing high-energy batteries.

Therefore, there is room for improvement in the art. CN 113131000A discloses a carbonate-based electrolyte comprising fluoroethylene carbonate, ethylene carbonate, diethyl carbonate; dimethoxyethane, LiPF6; lithium nitrate, and 12-crown-4.

### BRIEF DESCRIPTION OF THE DRAWINGS

In order to illustrate the technical solutions of the embodiments of the present application more clearly, the accompanying drawings in the embodiments will be briefly introduced below. It should be understood that the following drawings only show some embodiments of the present application, and therefore should not be seen as the limiting the scope.

Implementations of the present technology will now be described, by way of embodiments, with reference to the attached figures, wherein:
FIG. 1 shows a flowchart of a method for making a carbonate-based electrolyte in one embodiment.
FIG. 2 shows a schematic view of a lithium metal battery in one embodiment.

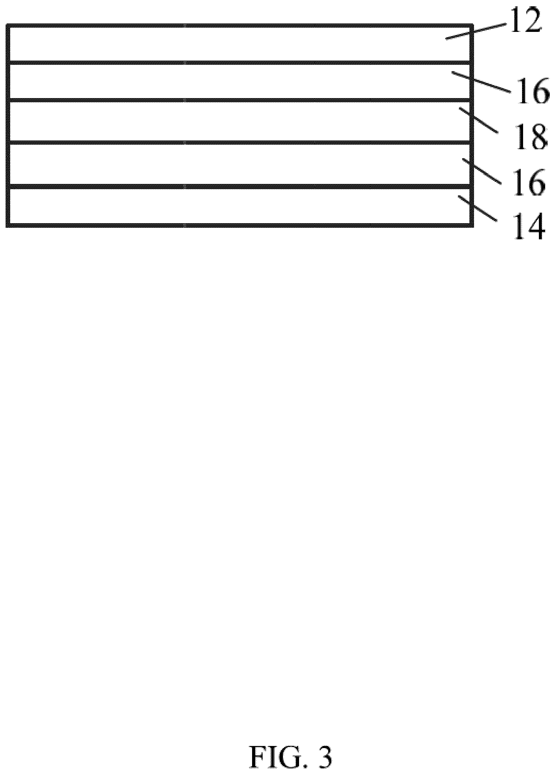

FIG. 3 shows a schematic view of a button-type battery in one embodiment.
FIG. 4 shows charging/discharging results of a first lithium metal battery.
FIG. 5 shows charging/discharging results of a second lithium metal battery.
FIG. 6 shows charging/discharging results of the button-type battery illustrated in FIG. 3.
FIG. 7 shows specific capacity results of the button-type battery at different charge/discharge rates.

### DETAILED DESCRIPTION OF EXEMPLARY EMBODIMENTS

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. The drawings are not necessarily to scale, and the proportions of certain parts may be exaggerated better illustrate details and features. The description is not to be considered as limiting the scope of the embodiments described herein.

The term "outside" refers to a region that is beyond the outermost confines of a physical object. The term "inside" indicates that at least a portion of a region is partially contained within a boundary formed by the object. The term "substantially" is defined to essentially conforming to the particular dimension, shape or other word that substantially modifies, such that the component need not be exact. For example, substantially cylindrical means that the object resembles a cylinder, but can have one or more deviations from a true cylinder. The term "comprising" means "including, but not necessarily limited to"; it specifically indicates open-ended inclusion or membership in a so-described combination, group, series and the like. It should be noted that references to "an" or "one" embodiment in this disclosure are not necessarily to the same embodiment, and such references mean at least one.

The present application provides a carbonate-based electrolyte. The carbonate-based electrolyte includes a carbonate, an ether, a lithium salt, a lithium nitrate (LiNO₃), and a planar macrocyclic compound. The volume ratio of the carbonate to the ether is in a range from 1:2 to 2:1. The volume ratio of the carbonate to the ether can be 1:1, 2:1, or 1:2. The concentrations of the lithium nitrate and the planar macrocyclic compound are all low, the weight percentage of the lithium nitrate in the carbonate-based electrolyte is in a range from 0.5wt% to 5wt%, and the concentration of the planar macrocyclic compound is in a range from 0.5 millimolar concentration to 4 millimolar concentration. The weight ratio of the planar macrocyclic compound, the lithium nitrate and the lithium salt in the carbonate-based electrolyte is that planar macrocyclic compound: lithium nitrate: lithium salt = 1:15~45:400~500. In one embodiment, the weight ratio of the planar macrocyclic compound, the lithium nitrate and the lithium salt in the carbonate-based electrolyte is that planar macrocyclic compound: lithium nitrate: lithium salt = 1: 25-35: 450~480. In one embodiment, planar macrocyclic compound: lithium nitrate: lithium salt (weight ratio) = 0.2: 5.6: 94.2. In one embodiment, the carbonate-based electrolyte consists of the carbonate, the ether, the lithium salt, the lithium nitrate (LiNO₃), and the planar macrocyclic compound.

The carbonate may be a cyclic carbonate and/or a chain carbonate. The cyclic carbonate may be an ethylene carbonate (EC), a propylene carbonate (PC), or a combination thereof. The chain carbonate may be a dimethyl carbonate (DMC), a diethyl carbonate (DEC), an ethyl methyl carbonate, or combinations thereof. Conventional carbonate-based solvents used in electrolytes all satisfy the present application.

The ether may be a dimethoxymethane (DME), diethylene glycol dimethyl ether (diglyme), triethylene glycol dimethyl ether (TREGDME), tetraethylene glycol dimethyl ether (TEGDME), or a combination thereof. In addition, the ether that can satisfy the solubility to lithium nitrate, that is, the ether that can dissolve lithium nitrate, all satisfy the present application.

The lithium salt is a lithium salt other than lithium nitrate, which may be lithium bis(trifluoromethanesulfonyl)imide (LiTFSI), lithium hexafluorophosphate (LiPF₆), lithium bis(fluorosulfonyl)imide (LiFSI), lithium tetrafluoroborate (LiBF₄), lithium bis(oxalate)borate ( LiBOB), lithium difluoro(oxalato)borate (LiDFOB), or a combination thereof. Conventional lithium salts used in electrolytes all satisfy the present application.

The planar macrocyclic compound may be Porphyrin, Phthalocyanine, Crown Ether, Cyclodextrin, Calixarene, or a combination thereof. The planar macrocyclic compound may have a configuration that formed by interconnecting carbon atoms and have the same configuration as the aforementioned compounds. The planar macrocyclic compound can also be a metal derivative of porphyrin, wherein the metal in the metal derivative of porphyrin refers to a metal that can coordinate with porphyrin, and the metal is a divalent metal, such as zinc, copper, iron etc.

In one embodiment, the carbonate-based electrolyte contains ethylene carbonate, ethylene glycol dimethyl ether, lithium bis(trifluoromethylsulfonyl)amide, porphyrin, and lithium nitrate. The weight ratio of porphyrin, lithium nitrate, and lithium bis(trifluoromethylsulfonyl)amide is that porphyrin: lithium nitrate: lithium bis(trifluoromethylsulfonyl)amide = 0.2: 5.6: 94.2. In another embodiment, the carbonate-based electrolyte consists of ethylene carbonate, ethylene glycol dimethyl ether, lithium bis(trifluoromethylsulfonyl)amide, lithium nitrate, and porphyrin; and porphyrin: lithium nitrate: lithium bis(trifluoromethylsulfonyl)amide (weight ratio) = 0.2: 5.6: 94.2.

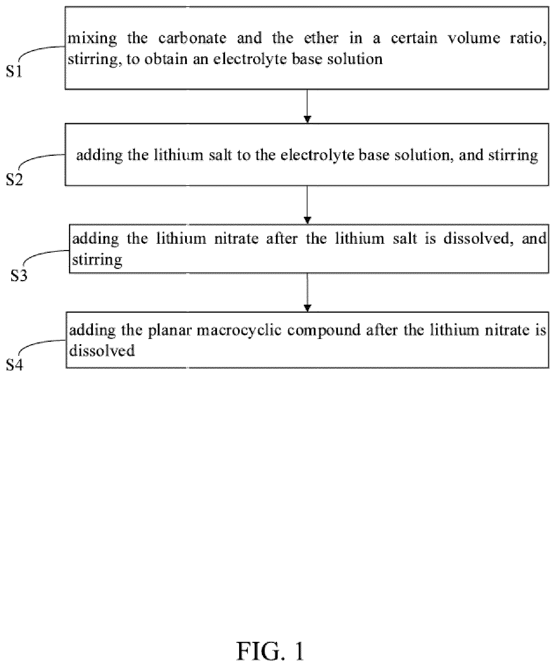

Referring to FIG. 1, a method for making the carbonate-based electrolyte is further provided, and the method includes the following steps:
S1, mixing the carbonate and the ether in a certain volume ratio, stirring, to obtain an electrolyte base solution;
S2, adding the lithium salt to the electrolyte base solution, and stirring;
S3, adding the lithium nitrate after the lithium salt is dissolved, and stirring; and
S4, adding the planar macrocyclic compound after the lithium nitrate is dissolved.

The carbonate is solid when the temperature is low, it is necessary to ensure that the carbonate and ether in step S1 are completely mixed to obtain the electrolyte base solution before proceeding to the subsequent steps. The order of steps S2, S3 and S4 is not limited, that is, the order of mixing and dissolving the electrolyte base solution, the lithium salt, the lithium nitrate, and the planar macrocyclic compound is not limited.

In one embodiment, in step S1, the carbonate and the ether are organic solvents. The carbonate and the ether are mixed in a certain volume ratio. The carbonate-based organic solvent is solid at room temperature, and can be heated to above 60 degrees Celsius for about two hours, so that the solid carbonate-based organic solvent is dissolved. In one embodiment, the carbonate-based organic solvent is ethylene carbonate, the ether-based organic solvent is ethylene glycol dimethyl ether, and the volume ratio of the ethylene carbonate to the ethylene glycol dimethyl ether is 1: 1.

In one embodiment, in step S2, the lithium salt that is subsequently added to the electrolyte base solution increases a large amount of lithium ions, thereby increasing the lithium ion conductivity of the electrolyte. In one embodiment, the lithium salt is lithium bis(trifluoromethylsulfonyl)amide.

In one embodiment, in step S3, after the lithium salt is completely dissolved, the lithium nitrate is added as a first electrolyte additive.

In one embodiment, in step S4, the planar macrocyclic compound is formed by interconnecting carbon atoms, and the planar macrocyclic compound is as a second electrolyte additive. In one embodiment, the planar macrocyclic compound is porphyrin.

The following are specific examples of the method for making the carbonate-based electrolyte.

### Example

First, in the environment where the saturated water vapor pressure is lower than 2 Pascals, the carbonate-based organic solvent and the ether-based organic solvent are respectively provided. The carbonate-based organic solvent and the ether-based organic solvent are mixed, and stirred evenly, to obtain the electrolyte base solution as an ion-conducting medium. The volume ratio of the carbonate-based organic solvent to the ether-based organic solvent is 1:1, 2:1, or 1:2. The carbonate-based organic solvent and the ether-based organic solvent are put into a quantitative bottle for standard volume quantification and stir evenly. Wherein the carbonate-based organic solvent is usually solid at room temperature, and is dissolved by heating to above 60 degrees Celsius for about two hours in advance.

Second, the lithium salt is weighed, then the lithium salt is added to the electrolyte base solution in step 1, and continuously stirring until the lithium salt is evenly dissolved. The role of the lithium salt is to conduct ions as the electrolyte, and the addition amount of the lithium salt is in a range from 0.5 molar concentration to 4 molar concentration.

Third, an appropriate amount of lithium nitrate is weighed and as the first electrolyte additive, then the lithium nitrate is add to the uniformly mixed solution in step 2, and continuously stirring until the first electrolyte additive is evenly dissolved. The weight percentage of lithium nitrate (the first electrolyte additive) in the carbonate-based electrolyte is in a range from 0.5wt% to 5wt%.

Fourth, an appropriate amount of planar macrocyclic compound is weighed and as the second electrolyte additive, then the planar macrocyclic compound is added into the solution that is uniformly mixed and contains the lithium nitrate in step 3, and continuously stirring until the second electrolyte additive is evenly dispersed, to obtain the carbonate electrolyte. The addition amount of the planar macrocyclic compound (the second electrolyte additive) is in a range from 0.5 millimolar to 4 millimolar.

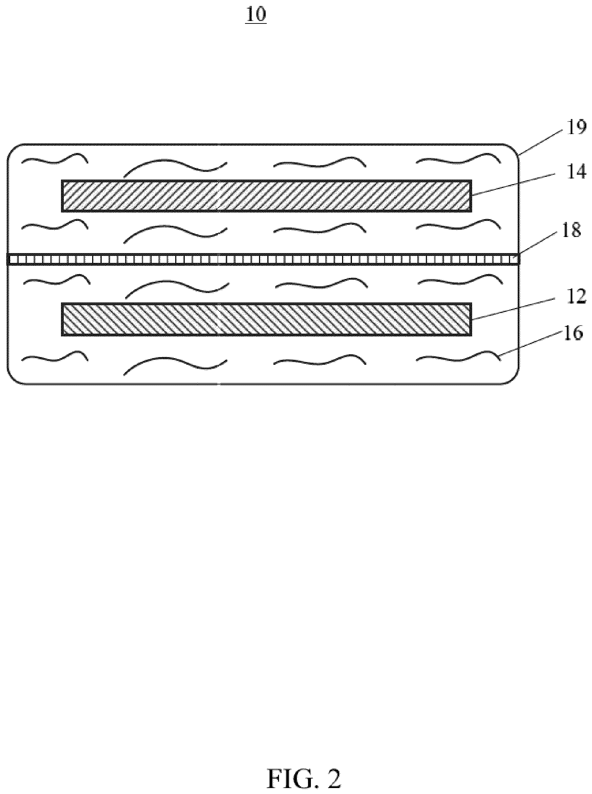

Referring to FIG. 2, the present application further provides a lithium metal battery 10. The lithium metal battery 10 includes a positive electrode 12, a negative electrode 14, an electrolyte 16, and a separator 18. The electrolyte 16 is the carbonate-based electrolyte, and the carbonate-based electrolyte includes the carbonate, the ether, the lithium salt, the lithium nitrate, and the planar macrocyclic compound, which have been described in detail above. The lithium metal battery 10 further includes a casing 19 covering the positive electrode 12, the negative electrode 14, the electrolyte 16, and the separator 18.

The material of the positive electrode 12 is a high-voltage positive electrode material, and the negative electrode 14 is lithium metal. The types of the separator 18 and the casing 19 are not limited, as long as the separator 18 and the casing 19 meet the needs of lithium metal batteries. The cut-off voltage of the high-voltage positive material is greater than 4.2 V, such as lithium-nickel-cobalt-manganese ternary positive material (NCM811). In one embodiment, the positive electrode 12 is a high-nickel lithium-nickel-cobalt-manganese ternary material (LiNi_{1-x-y}CoₓMn_{y}O₂), wherein 0.05≤X≤0.2, 0.05≤Y≤0.2; the negative electrode 14 is lithium metal, and the separator 18 is Celgard 2320; the separator 18 is located between the positive electrode 12 and the negative electrode 14; and the positive electrode 12, the negative electrode 14 and the separator 18 are in the electrolyte 16, to form a button-type battery, as shown in FIG. 13. The electrochemical properties of the button-type battery are verified below.

A first lithium metal battery and a second lithium metal battery are provided for comparison. The structures of the first lithium metal battery, the second lithium metal battery and the button-type battery are similar, the only difference being that they use different electrolytes. The first lithium metal battery uses the first electrolyte, the second lithium metal battery uses the second electrolyte, and the button-type battery uses the carbonate-based electrolyte. The preparation methods of the first electrolyte and the second electrolyte are similar to that of the carbonate-based electrolyte, the only difference is that only the first electrolyte additive (lithium nitrate) is added to the first electrolyte, only the second electrolyte additive (planar macrocyclic compound) is added to the second electrolyte, and the carbonate-based electrolyte is added with the first electrolyte additive (lithium nitrate) and the second electrolyte additive (planar macrocyclic compound), wherein the weight ratio of the planar macrocyclic compound to the lithium nitrate is 0.2: 5.6.

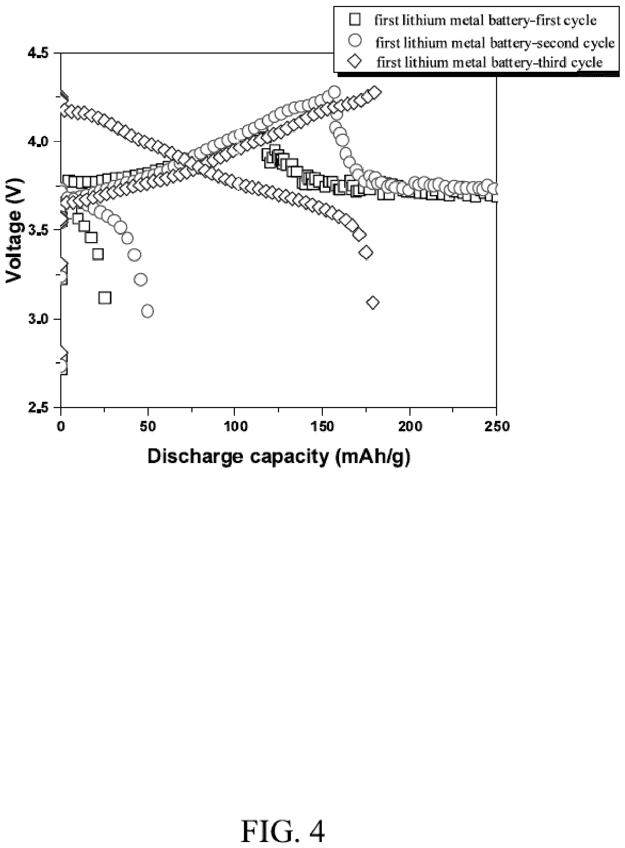

FIG. 4 shows the first to third cycle charge/discharge behaviors of the first lithium metal battery under the condition of 0.1C. It can be seen from FIG. 4 that when only the first electrolyte additive (lithium nitrate) is added, the first lithium metal battery cannot be fully charged to the set voltage (2.7 to 4.3 volts) in the first and second cycles, forming a micro-short circuit condition; and the discharge specific capacity is only 25 mAh/g to 50 mAh/g. However, after the third cycle, it can recover to a specific capacity of about 175 mAh/g. This behavior indicates that a large amount of lithium ions interact with the positive electrode, the negative electrode, and the first electrolytic during the first and the second cycle charge/discharge behavior, to form an SEI layer. The formation of SEI layer causes a huge loss of lithium ions, which is not suppressed until the third cycle of the charge/discharge behavior.

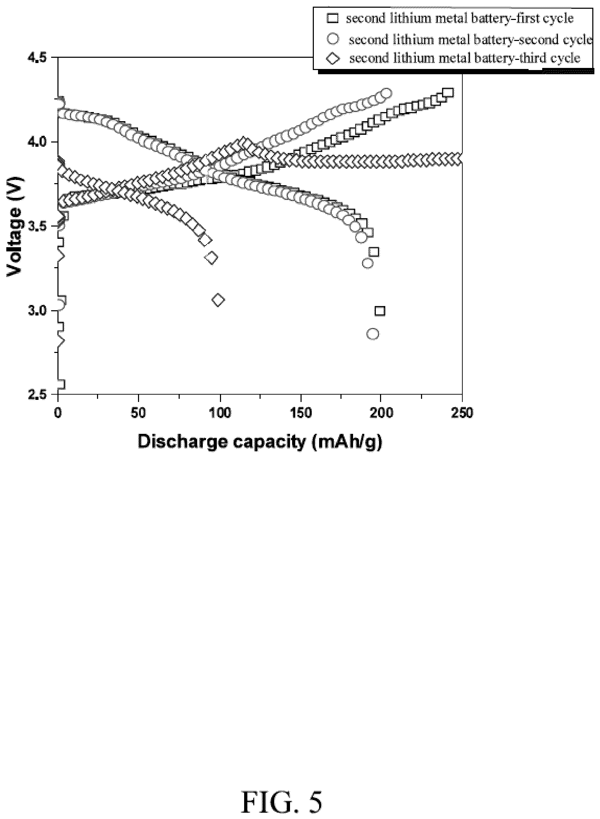

FIG. 5 shows the first to third cycle charge/discharge behaviors of the second lithium metal battery under the condition of 0.1C. It can be seen from FIG. 5 that when only the second electrolyte additive (planar macrocyclic compound) is added, the second lithium metal battery can be charged to the set voltage (2.7 to 4.3 volts) in the first cycle and the second cycle, and the discharge specific capacity can also reach 200 mAh/g. However, the charging behavior of the third cycle is the same as that in FIG. 4, the second lithium metal battery cannot be charged to the set voltage (2.7 to 4.3 volts), and the specific capacity of the discharge immediately declines to 100 mAh/g, which means that the charging/discharging of the third cycle begins to form a micro-short circuit behavior, that is, the lithium dendrites are formed.

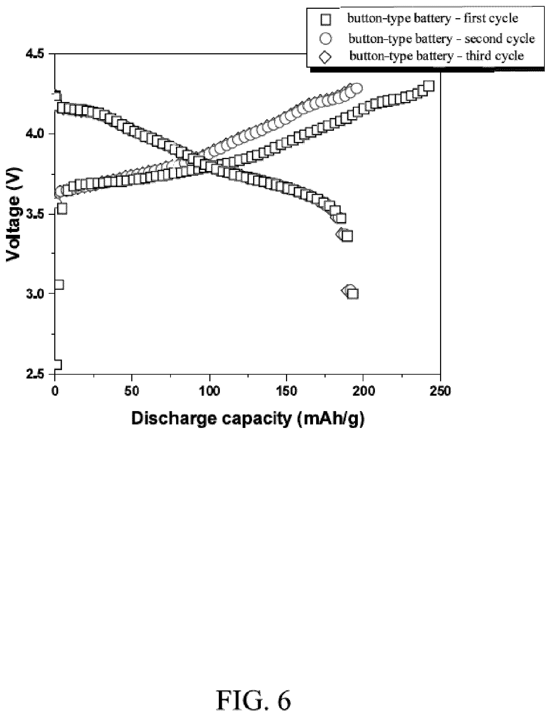

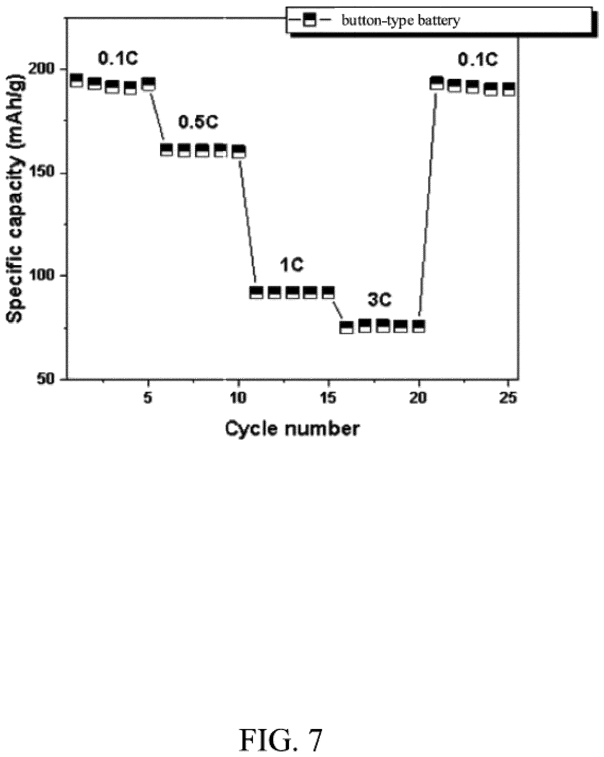

FIG. 6 shows that first to third cycle charge/discharge behaviors of the button-type battery under the condition of 0.1C. As shown in FIG. 6, the first to third cycle charge/discharge behaviors of the button-type battery are very stable, and the discharge specific capacity can reach about 195 mAh/g. It can be seen from FIG. 6 that although the first electrolyte additive (lithium nitrate) can assist in the formation of the stable SEI layer, lithium nitrate requires about more than 20 hours of charge/discharge behavior at low concentrations to form the stable SEI layer. If the concentration of lithium nitrate is increased, there may be a risk of outgassing. The second electrolyte additive (planar macrocyclic compound) is highly lithiophilic, so the structural molecules of the planar macrocyclic compound can preferentially attach to the surface of the lithium metal negative electrode, to form an artificial solid electrolyte interphase (ASEI) layer. However, due to the excessive electrochemical potential between the positive and negative electrodes, the structural molecules of the planar macrocyclic compound cannot effectively and continuously inhibit the degradation of the electrolyte, resulting in the formation of an uneven SEI layer and lithium dendrites. The first electrolyte additive (lithium nitrate) and the second electrolyte additive (planar macrocyclic compound) are added together into the mixture of carbonate and ether, because the structural molecule of the planar macrocyclic compound is highly lithiophilic, the ASEI layer is formed in the charge/discharge behavior of the first cycle and the second cycle. Due to the assistance of low-concentration lithium nitrate, the stable SEI layer is gradually formed at the beginning of the third cycle of charge and discharge, thus the first three cycles of the button-type battery and the subsequent charge and discharge behaviors at different rates are very stable, and only 1 % loss is carried out after 25 cycles at different charge and discharge rates, as shown in FIG. 7. FIG. 7 shows specific capacity results of the button-type battery at different charge/discharge rates (0.1C-3C).

The carbonate-based electrolyte, the method for making the carbonate-based electrolyte, and the lithium metal battery using the carbonate-based electrolyte have following advantages.

First, the present application adds the lithium nitrate having low concentration and the planar macrocyclic compound having low concentration into the mixture of the carbonate and ether, to form the carbonate-based electrolyte. The lithium metal battery is not only applied to high-voltage positive electrode material, such as lithium-nickel-cobalt-manganese ternary positive electrode material (NCM811), but also has better stability at different charge/discharge rates than only adding the lithium nitrate or only adding the planar macrocyclic compound.

Second, the anion of lithium nitrate and lithium ions, lithium salt anions and the organic solvent form solvent shells, the solvent shells will cover more lithium salt anions and rapidly promote the formation of SEI layer. However, adding too much lithium nitrate to the electrolyte may easily cause the risk of outgassing; and insufficient addition of lithium nitrate will cause uneven formation of the SEI layer or the formation speed of the SEI layer is too slow, resulting in a significant loss of Coulombic efficiency in the first cycle. Although the concentration of lithium nitrate in the carbonate-based electrolyte provided by the present application is very low, due to the highly lithiophilic characteristic of the structural molecule of the planar macrocyclic compound, in the first cycle and the second cycle of the lithium metal battery, the ASEI layer is formed in the first and second cycles of charging/discharging of lithium metal battery, and the stable SEI layer is gradually formed at the beginning of the third cycle of charging and discharging, which overcomes the problem of "adding too much lithium nitrate in the electrolyte will easily cause the risk of outgassing, while insufficient lithium nitrate will cause insufficient SEI layer characteristics and cause a significant loss of Coulombic efficiency in the first cycle".

Third, the first three cycles of the lithium metal battery provided by the present application (using the carbonate-based electrolyte) and subsequent charge and discharge behaviors at different rates are very stable.

Fourth, in the carbonate-based electrolyte provided by the present application, the lithium nitrate additive promotes the formation of solvent shells between anions and lithium ions, the lithium salt anions and the organic solvent in the electrolyte, thereby accelerating the formation of the SEI layer. The structural molecule of the planar macrocyclic compound is highly lithiophilic, the planar structure molecule can preferentially adhere to the surface of the lithium metal negative electrode to form the ASEI layer, so that the Coulombic efficiency of the first cycle of the lithium metal battery can be greatly maintained. Then the lithium nitrate starts to slowly form a uniform SEI layer with lithium metal. In this way, the carbonate-based electrolyte can be combined with the lithium metal negative electrode and the high-voltage positive electrode material to form the lithium metal battery. The degradation rate of the lithium metal battery after a rapid charge and discharge test of more than 25 cycles is only 1%.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in matters of shape, size and arrangement of the parts within the principles of the present disclosure up to, and including, the full extent established by the broad general meaning of the terms used in the claims.

The above embodiments are only used to illustrate the technical solutions of the present application rather than limitations. Although the present application has been described in detail with reference to the above preferred embodiments, one of ordinary skill in the art should understand that the technical solutions of the present application may be modified or equivalently replaced within the scope of the claims.

## Claims

1. A carbonate-based electrolyte comprising:
a carbonate;
an ether;
a lithium salt;
a lithium nitrate; and
a planar macrocyclic compound, wherein a concentration of the planar macrocyclic compound is in a range from 0.5 millimolar concentration to 4 millimolar concentration.

2. The carbonate-based electrolyte of claim 1, wherein a volume ratio of the carbonate to the ether is in a range from 1:2 to 2:1.

3. The carbonate-based electrolyte of claim 1, wherein a weight percentage of the lithium nitrate is in a range from 0.5wt. % to 5wt. %.

4. The carbonate-based electrolyte of claim 1, wherein the carbonate is a cyclic carbonate or a chain carbonate.

5. The carbonate-based electrolyte of claim 4, wherein the cyclic carbonate is ethylene carbonate, propylene carbonate, or combination thereof;
the chain carbonate is dimethyl carbonate, diethyl carbonate, ethyl methyl carbonate, or a combination thereof.

6. The carbonate-based electrolyte of claim 1, wherein the planar macrocyclic compound is porphyrin, phthalocyanine, crown ether, cyclodextrin, calixarene, or a combination thereof, or a metal derivative of porphyrin.

7. The carbonate-based electrolyte of claim 1, wherein the ether is dimethoxymethane, diethylene glycol dimethyl ether, triethylene glycol dimethyl ether, tetraethylene glycol dimethyl ether, or a combination thereof.

8. The carbonate-based electrolyte of claim 1, wherein the lithium salt is lithium bis(trifluoromethanesulfonyl)imide, lithium hexafluorophosphate, lithium bis(fluorosulfonyl)imide, lithium tetrafluoroborate, lithium bis(oxalate)borate, lithium difluoro(oxalato)borate, or a combination thereof.

9. The carbonate-based electrolyte of claim 1, wherein a weight ratio of the planar macrocyclic compound, the lithium nitrate and the lithium salt is 1:15~45:400~500.

10. A method of making a carbonate-based electrolyte comprising:
mixing a carbonate and an ether in a certain volume ratio and stirring, to obtain an electrolyte base solution;
adding a lithium salt to the electrolyte base solution, and stirring;
adding a lithium nitrate after the lithium salt is dissolved, and stirring, wherein a weight percentage of the lithium nitrate is in a range from 0.5wt. % to 5wt. %; and
adding a planar macrocyclic compound after the lithium nitrate is dissolved, wherein the planar macrocyclic compound has a concentration of 0.5 millimolar concentration to 4 millimolar concentration.

11. The method of claim 10, wherein the certain volume ratio of the carbonate to the ether is in a range from 1:2to 2:1.

12. The method of claim 10, wherein the planar macrocyclic compound is porphyrin, phthalocyanine, crown ether, cyclodextrin, calixarene, or a combination thereof, or a metal derivative of porphyrin.

13. The method of claim 10, wherein a weight ratio of the planar macrocyclic compound, the lithium nitrate and the lithium salt is 1:15~45:400~500.

14. A lithium metal battery comprising:
a positive electrode, wherein a material of the positive electrode is a high-voltage positive electrode material;
a negative electrode, wherein the negative electrode is lithium metal;
an electrolyte comprising a carbonate, an ether, a lithium salt, a lithium nitrate, and a planar macrocyclic compound, wherein in the electrolyte, a concentration of the planar macrocyclic compound is in a range from 0.5 millimolar concentration to 4 millimolar concentration; and
a separator.

15. The lithium metal battery of claim 14, wherein a cut-off voltage of the high-voltage positive electrode material is greater than 4.2V.

## Patentansprüche

1. Ein Elektrolyt auf Carbonatbasis, umfassend:
ein Carbonat;
einen Ether;
ein Lithiumsalz;
ein Lithiumnitrat; und
eine planare makrocyclische Verbindung,
wobei eine Konzentration der planaren makrocyclischen Verbindung in einem Bereich von 0.5 millimolarer Konzentration bis 4 millimolarer Konzentration liegt.

2. Der Elektrolyt auf Carbonatbasis nach Anspruch 1, wobei ein Volumenverhältnis des Carbonats zu dem Ether in einem Bereich von 1:2 bis 2:1 liegt.

3. Der Elektrolyt auf Carbonatbasis nach Anspruch 1, wobei ein Gewichtsprozentsatz des Lithiumnitrats in einem Bereich von 0.5 Gew.-% bis 5 Gew.-% liegt.

4. Der Elektrolyt auf Carbonatbasis nach Anspruch 1, wobei das Carbonat ein cyclisches Carbonat oder ein kettenförmiges Carbonat ist.

5. Der Elektrolyt auf Carbonatbasis nach Anspruch 4, wobei das cyclische Carbonat Ethylencarbonat, Propylencarbonat oder eine Kombination davon ist;
das kettenförmige Carbonat Dimethylcarbonat, Diethylcarbonat, Ethylmethylcarbonat oder eine Kombination davon ist.

6. Der Elektrolyt auf Carbonatbasis nach Anspruch 1, wobei die planare makrocyclische Verbindung Porphyrin, Phthalocyanin, Kronenether, Cyclodextrin, Calixaren oder eine Kombination davon, oder ein Metallderivat von Porphyrin ist.

7. Der Elektrolyt auf Carbonatbasis nach Anspruch 1, wobei der Ether Dimethoxymethan, Diethylenglykoldimethylether, Triethylenglykoldimethylether, Tetraethylenglykoldimethylether oder eine Kombination davon ist.

8. Der Elektrolyt auf Carbonatbasis nach Anspruch 1, wobei das Lithiumsalz Lithium-bis(trifluormethansulfonyl)imid, Lithiumhexafluorphosphat, Lithium-bis(fluorsulfonyl)imid, Lithiumtetrafluorborat, Lithium-bis(oxalat)borat, Lithiumdifluor(oxalato)borat oder eine Kombination davon ist.

9. Der Elektrolyt auf Carbonatbasis nach Anspruch 1, wobei ein Gewichtsverhältnis der planaren makrocyclischen Verbindung, des Lithiumnitrats und des Lithiumsalzes 1:15~45:400~500 beträgt.

10. Ein Verfahren zur Herstellung eines Elektrolyten auf Carbonatbasis, umfassend:
mischen eines Carbonats und eines Ethers in einem bestimmten Volumenverhältnis und Rühren, um eine Elektrolytbasislösung zu erhalten;
hinzufügen eines Lithiumsalzes zu der Elektrolytbasislösung und Rühren;
hinzufügen eines Lithiumnitrats, nachdem das Lithiumsalz gelöst ist, und Rühren, wobei ein Gewichtsprozentsatz des Lithiumnitrats in einem Bereich von 0.5 Gew.-% bis 5 Gew.-% liegt; und
hinzufügen einer planaren makrocyclischen Verbindung, nachdem das Lithiumnitrat gelöst ist, wobei die planare makrocyclische Verbindung eine Konzentration von 0.5 millimolarer Konzentration bis 4 millimolarer Konzentration aufweist.

11. Das Verfahren nach Anspruch 10, wobei das bestimmte Volumenverhältnis des Carbonats zu dem Ether in einem Bereich von 1:2 bis 2:1 liegt.

12. Das Verfahren nach Anspruch 10, wobei die planare makrocyclische Verbindung Porphyrin, Phthalocyanin, Kronenether, Cyclodextrin, Calixaren oder eine Kombination davon, oder ein Metallderivat von Porphyrin ist.

13. Das Verfahren nach Anspruch 10, wobei ein Gewichtsverhältnis der planaren makrocyclischen Verbindung, des Lithiumnitrats und des Lithiumsalzes 1:15~45:400~500 beträgt.

14. Eine Lithiummetallbatterie, umfassend:
eine positive Elektrode, wobei ein Material der positiven Elektrode ein Hochspannungs-Positivelektrodenmaterial ist;
eine negative Elektrode, wobei die negative Elektrode Lithiummetall ist;
einen Elektrolyten, der ein Carbonat, einen Ether, ein Lithiumsalz, ein Lithiumnitrat und eine planare makrocyclische Verbindung umfasst, wobei in dem Elektrolyten eine Konzentration der planaren makrocyclischen Verbindung in einem Bereich von 0.5 millimolarer Konzentration bis 4 millimolarer Konzentration liegt; und
einen Separator.

15. Die Lithiummetallbatterie nach Anspruch 14, wobei eine Abschaltspannung des Hochspannungs-Positivelektrodenmaterials größer als 4.2 V ist.

## Revendications

1. Un électrolyte à base de carbonate comprenant:
un carbonate;
un éther;
un sel de lithium;
un nitrate de lithium; et
un composé macrocyclique plan,
dans lequel une concentration du composé macrocyclique plan est comprise dans une plage allant d'une concentration de 0.5 millimolaire à une concentration de 4 millimolaires.

2. L'électrolyte à base de carbonate selon la revendication 1, dans lequel un rapport volumique du carbonate sur l'éther est compris dans une plage allant de 1:2 à 2:1.

3. L'électrolyte à base de carbonate selon la revendication 1, dans lequel un pourcentage en poids du nitrate de lithium est compris dans une plage allant de 0.5 % en poids à 5 % en poids.

4. L'électrolyte à base de carbonate selon la revendication 1, dans lequel le carbonate est un carbonate cyclique ou un carbonate à chaîne (linéaire).

5. L'électrolyte à base de carbonate selon la revendication 4, dans lequel le carbonate cyclique est le carbonate d'éthylène, le carbonate de propylène ou une combinaison de ceux-ci;
le carbonate à chaîne est le carbonate de diméthyle, le carbonate de diéthyle, le carbonate d'éthylméthyle ou une combinaison de ceux-ci.

6. L'électrolyte à base de carbonate selon la revendication 1, dans lequel le composé macrocyclique plan est la porphyrine, la phtalocyanine, l'éther couronne, la cyclodextrine, le calixarène ou une combinaison de ceux-ci, ou un dérivé métallique de porphyrine.

7. L'électrolyte à base de carbonate selon la revendication 1, dans lequel l'éther est le diméthoxyméthane, l'éther diméthylique de diéthylèneglycol, l'éther diméthylique de triéthylèneglycol, l'éther diméthylique de tétraéthylèneglycol ou une combinaison de ceux-ci.

8. L'électrolyte à base de carbonate selon la revendication 1, dans lequel le sel de lithium est le bis(trifluorométhanesulfonyl)imide de lithium, l'hexafluorophosphate de lithium, le bis(fluorosulfonyl)imide de lithium, le tétrafluoroborate de lithium, le bis(oxalate)borate de lithium, le difluoro(oxalato)borate de lithium ou une combinaison de ceux-ci.

9. L'électrolyte à base de carbonate selon la revendication 1, dans lequel un rapport pondéral du composé macrocyclique plan, du nitrate de lithium et du sel de lithium est de 1:15~45:400~500.

10. Un procédé de fabrication d'un électrolyte à base de carbonate comprenant:
le mélange d'un carbonate et d'un éther selon un certain rapport volumique et l'agitation, pour obtenir une solution de base d'électrolyte;
l'ajout d'un sel de lithium à la solution de base d'électrolyte, et l'agitation;
l'ajout d'un nitrate de lithium après la dissolution du sel de lithium, et l'agitation, dans lequel un pourcentage en poids du nitrate de lithium est compris dans une plage allant de 0,5 % en poids à 5 % en poids; et
l'ajout d'un composé macrocyclique plan après la dissolution du nitrate de lithium, dans lequel le composé macrocyclique plan a une concentration allant d'une concentration de 0,5 millimolaire à une concentration de 4 millimolaires.

11. Le procédé selon la revendication 10, dans lequel ledit certain rapport volumique du carbonate sur l'éther est compris dans une plage allant de 1:2 à 2:1.

12. Le procédé selon la revendication 10, dans lequel le composé macrocyclique plan est la porphyrine, la phtalocyanine, l'éther couronne, la cyclodextrine, le calixarène ou une combinaison de ceux-ci, ou un dérivé métallique de porphyrine.

13. Le procédé selon la revendication 10, dans lequel un rapport pondéral du composé macrocyclique plan, du nitrate de lithium et du sel de lithium est de 1:15~45:400~500.

14. Une batterie au lithium métallique comprenant:
une électrode positive, dans laquelle un matériau de l'électrode positive est un matériau d'électrode positive à haute tension;
une électrode négative, dans laquelle l'électrode négative est du lithium métallique;
un électrolyte comprenant un carbonate, un éther, un sel de lithium, un nitrate de lithium et un composé macrocyclique plan, dans laquelle, dans l'électrolyte, une concentration du composé macrocyclique plan est comprise dans une plage allant d'une concentration de 0.5 millimolaire à une concentration de 4 millimolaires; et
un séparateur.

15. La batterie au lithium métallique selon la revendication 14, dans laquelle une tension de coupure du matériau d'électrode positive à haute tension est supérieure à 4.2 V.
